# EUROPEAN PATENT APPLICATION

(11) **EP 4 693 100 A1**
(43) Date of publication of application: **11.02.2026**
(21) Application number: 24784641.3
(22) Date of filing: 28.02.2024
(51) Int. Cl.: G06N 3/008, B25J 13/00, B25J 13/08, G06F 16/9035, G10L 13/00, G10L 15/00

(54) **BEHAVIOR CONTROL SYSTEM, PROGRAM, AND ROBOT**

(30) Priority: 05.04.2023 JP 2023061766; 05.04.2023 JP 2023061767; 07.04.2023 JP 2023063085; 07.04.2023 JP 2023063086; 07.04.2023 JP 2023063087
(71) Applicant: SoftBank Group Corp., Tokyo 105-7537 (JP)
(72) Inventor: SON, Masayoshi, Tokyo 1057537 (JP)
(74) Representative: DREISS Patentanwälte PartG mbB
(86) International application number: PCT/JP2024/007357
(87) International publication number: WO 2024/209845

(57) **Abstract**

The action control system includes: a user state recognition unit that recognizes a user state including an action of a user; an emotion determination unit that determines an emotion value indicating an emotion of the user based on the user state; and an action determination unit that determines an action corresponding to the action of the user based on a current emotion value determined by the emotion determination unit and historical data of a past emotion value determined by the emotion determination unit before the current emotion value is determined.

## Description

### Technical Field

The present invention relates to an action control system, a program, and a robot.

### Background Art

There is known an action control system including: an action information storage unit that stores determination information for determining an action based on a state of a user; a user state recognition unit that recognizes the state of the user; an action determination unit that determines an action to be performed based on the state of the user recognized by the user state recognition unit and the determination information; a reaction recognition unit that recognizes a reaction of the user to execution of the action determined by the action determination unit; a transmission unit that transmits, to an external server, the state of the user recognized by the user state recognition unit, the action determined by the action determination unit, and the reaction of the user recognized by the reaction recognition unit; a receiving unit that receives, from the server, an action suitable for the state of the user recognized by the user state recognition unit in a case where the action determination unit fails to determine the action to be performed based on the state of the user and the determination information; and an action information updating unit that updates the determination information based on the action received by the receiving unit from the server (see, for example, Japanese Patent No. 6053847).

### SUMMARY OF INVENTION

### Solution to Problem

According to a first aspect of the disclosure, an action control system is provided. The action control system includes: a user state recognition unit that recognizes a user state including an action of a user; an emotion determination unit that determines an emotion value indicating an emotion of the user based on the user state; and an action determination unit that determines an action corresponding to the action of the user based on a current emotion value determined by the emotion determination unit and historical data of a past emotion value determined by the emotion determination unit before the current emotion value is determined.

The action determination unit may determine, as the action corresponding to the action of the user, an action corresponding to a combination of the past emotion value and the current emotion value and an action classification of the user.

In a case where the past emotion value is a positive value and the current emotion value is a negative value, the action determination unit may determine, as the action corresponding to the action of the user, an action for changing the emotion value of the user to be a positive value.

The action control system may further include an action recognition unit that recognizes an action classification of the user based on the user state, in which the action determination unit may determine, as the action corresponding to the action of the user, an action determined based on a reaction rule corresponding to a combination of the past emotion value and the current emotion value and the action classification of the user.

The action determined by the action determination unit may include a gesture to be made by a robot.

The emotion determination unit may further determine an emotion value indicating an emotion of a robot, and the action determination unit may determine the action corresponding to the action of the user based on the current emotion value of the user determined by the emotion determination unit, the historical data of the past emotion value of the user determined by the emotion determination unit before the current emotion value is determined, and the emotion value of the robot.

The emotion determination unit may determine the emotion value indicating the emotion of the robot based on the user state or a state of the robot.

According to a second aspect of the invention, a program is provided. The program causes a computer to function as the action control system.

According to a third aspect of the invention, a robot is provided. The robot includes the action control system and a control target to be controlled by the action control system.

According to a fourth aspect of the invention, an action control system is provided. The action control system includes: a user state recognition unit that recognizes a user state including an action of a user; an emotion determination unit that determines an emotion value indicating an emotion of the user based on the user state recognized by the user state recognition unit; an individuality setting unit that sets an individuality of a robot in a case of responding to the action of the user; and an action determination unit that determines an action of the robot corresponding to the action of the user based on the individuality set by the individuality setting unit, historical data of a conversation with the user, and historical data of the emotion value of the user during the conversation.

The individuality setting unit may set the individuality of the robot in a case of responding to the action of the user based on the historical data of the conversation and the historical data of the emotion value.

The individuality setting unit may set the individuality of the robot in a case of responding to the action of the user based further on historical data of the individuality of the robot set during the conversation with the user.

The action control system may further include an action recognition unit that recognizes an action classification of the user based on the user state, in which the individuality setting unit may set the individuality of the robot in a case of responding to the action of the user based on the action classification of the user.

The action determined by the action determination unit may include a gesture to be made by the robot.

The emotion determination unit may further determine an emotion value indicating an emotion of the robot, and the action determination unit may determine the action corresponding to the action of the user based on the individuality set by the individuality setting unit, the historical data of the conversation with the user, the historical data of the emotion value of the user during the conversation, and the emotion value of the robot.

The emotion determination unit may determine the emotion value indicating the emotion of the robot based on the user state or a state of the robot.

According to a fifth aspect of the invention, a program is provided. The program causes a computer to function as the action control system.

According to a sixth aspect of the invention, a robot is provided. The robot includes the action control system and a control target to be controlled by the action control system.

In a case where a plurality of robots whose individuality is settable participate in a conversation in addition to the user, the individuality setting unit may set an individuality that is different from an individuality set in another robot.

According to a seventh aspect of the invention, an action control system is provided. The action control system includes: a user state recognition unit that recognizes a user state including an action of a user; an emotion determination unit that determines an emotion value indicating an emotion of a robot; a storage control unit that determines whether or not to store data including the action of the user in historical data based on the emotion value determined by the emotion determination unit; and an action determination unit that determines an action corresponding to the action of the user based on the user state.

The storage control unit may determine whether or not to store the data including the action of the user in the historical data based on a predetermined action intensity for the action determined by the action determination unit and the emotion value determined by the emotion determination unit.

The emotion value of the robot may include emotion values for a plurality of emotion classifications, and the storage control unit may determine whether or not to store the data including the action of the user in the historical data based on a total sum of the emotion values for the plurality of emotion classifications.

The action determined by the action determination unit may include a gesture to be made by the robot or an utterance content of the robot, and the storage control unit may determine whether or not to store the data including the action of the user in the historical data based on a predetermined action intensity for the gesture or the utterance content included in the action determined by the action determination unit and the emotion value determined by the emotion determination unit.

According to an eighth aspect of the invention, a program is provided. The program causes a computer to function as the action control system.

According to a ninth aspect of the invention, a robot is provided. The robot includes the action control system and a control target to be controlled by the action control system.

Note that the summary of the invention described above does not enumerate all the necessary features of the invention. Further, a sub-combination of these feature groups can also be the invention.

### BRIEF DESCRIPTION OF DRAWINGS

Fig. 1 schematically shows an example of a system 5 according to the present embodiment.
Fig. 2 schematically shows a functional configuration of a robot 100.
Fig. 3 schematically shows an example of an operation flow of the robot 100.
Fig. 4 schematically shows an example of an operation flow of the robot 100.
Fig. 5A schematically shows a functional configuration of the robot 100.
Fig. 5B schematically shows an example of an operation flow of the robot 100.
Fig. 6 schematically shows an example of a hardware configuration of a computer 1200.

### DESCRIPTION OF EMBODIMENTS

Hereinafter, the present invention will be described through embodiments of the invention, but the following embodiments do not limit the invention according to the claims. In addition, not all combinations of features described in the embodiments are essential to the solution of the invention.

### [First Embodiment]

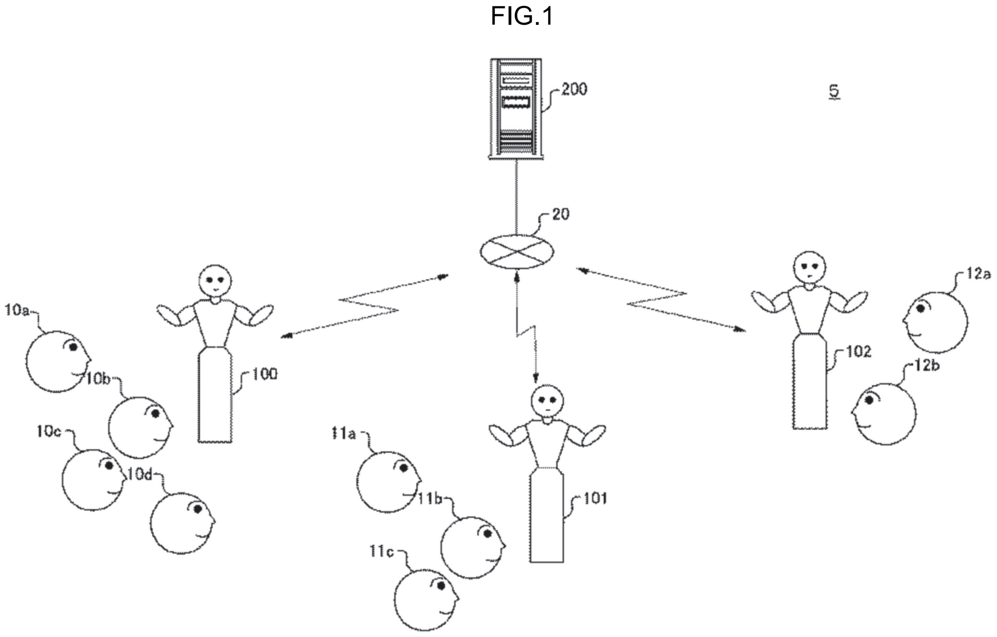

Fig. 1 schematically shows an example of a system 5 according to the present embodiment. The system 5 includes a robot 100, a robot 101, a robot 102, and a server 300. A user 10a, a user 10b, a user 10c, and a user 10d are users of the robot 100. A user 11a, a user 11b, and a user 11c are users of the robot 101. A user 12a and a user 12b are users of the robot 102. In the description of the present embodiment, the user 10a, the user 10b, the user 10c, and the user 10d may be collectively referred to as the user 10. Further, the user 11a, the user 11b, and the user 11c may be collectively referred to as the user 11. Further, the user 12a and the user 12b may be collectively referred to as the user 12. The robot 101 and the robot 102 have substantially the same functions as that of the robot 100. Therefore, the system 5 will be described focusing on the function of the robot 100.

The robot 100 has a conversation with the user 10 and provides a video to the user 10. At this time, the robot 100 has a conversation with the user 10, provides a video to the user 10, and the like in cooperation with the server 300 and the like that can perform communication via a communication network 20. For example, the robot 100 not only learns an appropriate conversation by itself, but also performs learning to have a more appropriate conversation with the user 10 in cooperation with the server 300. Further, the robot 100 causes the server 300 to record captured video data and the like of the user 10, requests the server 300 to transmit the video data and the like if necessary, and provides the video data and the like to the user 10.

Further, the robot 100 has an emotion value representing a type of an emotion thereof. For example, the robot 100 has the emotion value representing an intensity of each of emotions "joy", "anger", "sorrow", "pleasure", "comfort", "discomfort", "relief", "anxiety", "sadness", "excitement", "worry", "reassurance", "sense of fulfillment", "sense of emptiness", and "neutral". For example, in the case of having a conversation with the user 10 in a state in which the emotion value of excitement is large, the robot 100 utters a speech at a high speed. As described above, the robot 100 can express the emotion thereof by an action.

Further, the robot 100 has a function of recognizing the action of the user 10. The robot 100 recognizes the action of the user 10 by analyzing a face image of the user 10 acquired by a camera function and a speech of the user 10 acquired by a microphone function. The robot 100 determines an action to be performed by the robot 100 based on the recognized action of the user 10 or the like.

The robot 100 stores a rule setting an action to be performed by the robot 100 based on the emotion of the user 10, the emotion of the robot 100, and the action of the user 10, and performs various actions according to the rule.

Specifically, the robot 100 has a reaction rule for determining the action of the robot 100 based on the emotion of the user 10, the emotion of the robot 100, and the action of the user 10. In the reaction rule, for example, an action of "laughing" is set as the action of the robot 100 for a case where the action of the user 10 is "laughing". Further, in the reaction rule, an action of "apologizing" is set as the action of the robot 100 for a case where the action of the user 10 is "getting angry". Further, in the reaction rule, an action of "answering" is set as the action of the robot 100 for a case where the action of the user 10 is "asking a question". In the reaction rule, an action of "calling out" is set as the action of the robot 100 for a case where the action of the user 10 is "being sad".

In a case where the robot 100 recognizes that the action of the user 10 is "getting angry", the robot 100 selects the action of "apologizing" set in the reaction rule as an action to be performed by the robot 100 based on the reaction rule. For example, in a case where the action of "apologizing" is selected, the robot 100 performs the action of "apologizing" and outputs a speech representing words of "apology".

Further, in a case where a condition that the emotion of the robot 100 is "neutral" (that is, "joy" = 0, "anger" = 0, "sorrow" = 0, and "pleasure" = 0) and a state of the user 10 is "alone and looking lonely" is satisfied, a content of a change in the emotion of the robot 100 to "worried" is determined, and it is determined that the action of "calling out" can be performed.

In a case where the robot 100 recognizes that the current emotion of the robot 100 is "neutral" and the user 10 is alone and looks lonely, the emotion value of "sorrow" of the robot 100 is increased based on the reaction rule. Further, the robot 100 selects the action of "calling out" set in the reaction rule as an action to be performed for the user 10. For example, in a case where the action of "calling out" is selected, the robot 100 converts a phrase "What's wrong?" expressing that the robot 100 is worried into a sympathetic voice, and outputs the voice.

Further, the robot 100 transmits, to the server 300, user reaction information indicating that a positive reaction has been obtained from the user 10 for the action. Examples of the user reaction information include the user action of "getting angry", the action of the robot 100 of "apologizing", the positive reaction of the user 10, and an attribute of the user 10.

The server 300 stores the user reaction information received from the robot 100. The server 300 receives and stores the user reaction information not only from the robot 100 but also from each of the robot 101 and the robot 102. Then, the server 300 analyzes the user reaction information from the robot 100, the robot 101, and the robot 102, and updates the reaction rule.

The robot 100 receives the updated reaction rule from the server 300 by inquiring the server 300 about the updated reaction rule. The robot 100 incorporates the updated reaction rule into the reaction rule stored in the robot 100. As a result, the robot 100 can incorporate the reaction rule acquired by the robot 101, the robot 102, or the like into the reaction rule thereof.

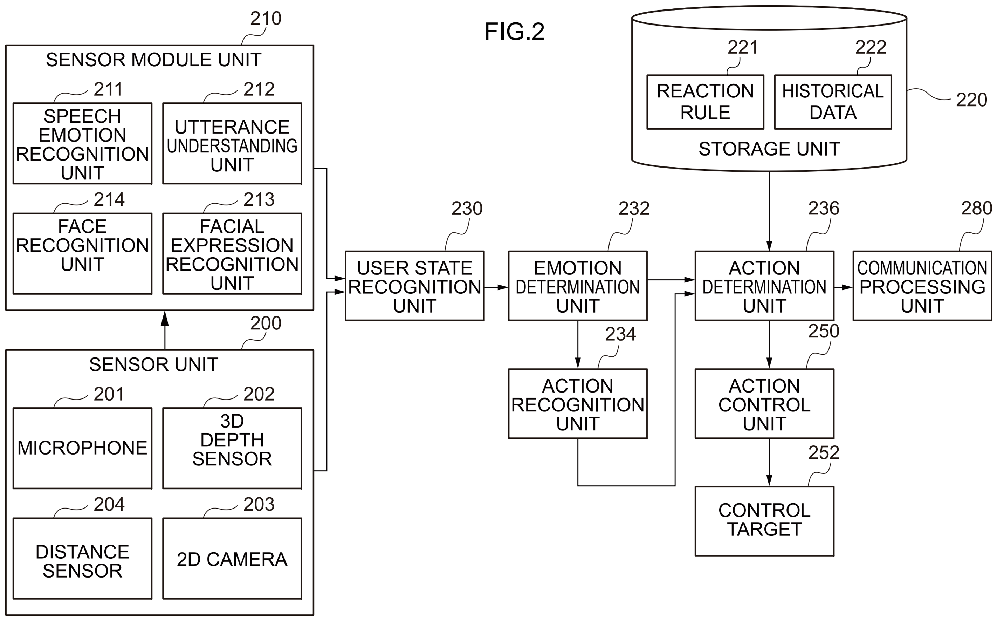

Fig. 2 schematically shows a functional configuration of the robot 100. The robot 100 includes a sensor unit 200, a sensor module unit 210, a storage unit 220, a user state recognition unit 230, an emotion determination unit 232, an action recognition unit 234, an action determination unit 236, an action control unit 250, a control target 252, and a communication processing unit 280.

The control target 252 includes a display device, a speaker, a light emitting diode (LED) of an eye portion, motors that drive an arm, a hand, a foot, and the like, and the like. A posture and a gesture of the robot 100 are controlled by controlling the motors for the arm, the hand, the foot, and the like. Some emotions of the robot 100 can be expressed by controlling the motors. Furthermore, a facial expression of the robot 100 can be expressed by controlling a light emission state of the LED of the eye portion of the robot 100. The posture, the gesture and the facial expression of the robot 100 are examples of an attitude of the robot 100.

The sensor unit 200 includes a microphone 201, a 3D depth sensor 202, a 2D camera 203, and a distance sensor 204. The microphone 201 continuously detects a speech and outputs speech data. The microphone 201 may be provided at a head portion of the robot 100 and may have a function of performing binaural recording. The 3D depth sensor 202 detects an outline of an object by continuously radiating an infrared pattern and analyzing the infrared pattern based on an infrared image continuously captured by an infrared camera. The 2D camera 203 is an example of an image sensor. The 2D camera 203 performs imaging with visible light and generates video information of visible light. The distance sensor 204 detects a distance to an object by emitting, for example, a laser beam or an ultrasonic wave. The sensor unit 200 may further include a clock, a gyro sensor, a touch sensor, a sensor for motor feedback, and the like.

Among the components of the robot 100 shown in Fig. 2, the components other than the control target 252 and the sensor unit 200 are examples of components included in an action control system included in the robot 100. The action control system of the robot 100 controls the control target 252.

The storage unit 220 includes a reaction rule 221 and historical data 222. The historical data 222 includes a history of the past emotion value of the user 10. The history of the emotion value is recorded for each user 10 by being associated with identification information of the user 10, for example. At least a part of the storage unit 220 is implemented by a storage medium such as a memory. A person DB that stores a face image of the user 10, attribute information of the user 10, and the like may be included. Among the components of the robot 100 shown in Fig. 2, functions of the components other than the control target 252, the sensor unit 200, and the storage unit 220 can be implemented by a CPU operating based on a program. For example, the functions of the components can be implemented as an operation of the CPU by basic software (operating system (OS)) and a program operating on the OS.

The sensor module unit 210 includes a speech emotion recognition unit 211, an utterance understanding unit 212, a facial expression recognition unit 213, and a face recognition unit 214. Information detected by the sensor unit 200 is input to the sensor module unit 210. The sensor module unit 210 analyzes the information detected by the sensor unit 200 and outputs an analysis result to the user state recognition unit 230.

The speech emotion recognition unit 211 of the sensor module unit 210 analyzes a speech of the user 10 detected by the microphone 201 to recognize the emotion of the user 10. For example, the speech emotion recognition unit 211 extracts a feature amount such as a frequency component of a speech and recognizes the emotion of the user 10 based on the extracted feature amount. The utterance understanding unit 212 analyzes the speech of the user 10 detected by the microphone 201 and outputs text information indicating an utterance content of the user 10.

The facial expression recognition unit 213 recognizes a facial expression of the user 10 and the emotion of the user 10 from an image of the user 10 captured by the 2D camera 203. For example, the facial expression recognition unit 213 recognizes the facial expression and the emotion of the user 10 based on shapes, positional relationships, and the like of the eyes and the mouth.

The face recognition unit 214 recognizes the face of the user 10. The face recognition unit 214 recognizes the user 10 by matching a face image stored in the person DB (not shown) with a face image of the user 10 captured by the 2D camera 203.

The user state recognition unit 230 recognizes a state of the user 10 based on the information analyzed by the sensor module unit 210. For example, processing mainly related to perception is performed using an analysis result of the sensor module unit 210. For example, perception information such as "Dad is alone" and "There is a 90% probability that dad is not smiling" is generated. Processing of understanding the meaning of the generated perception information is performed. For example, semantic information such as "Dad is alone and looks lonely" is generated.

The emotion determination unit 232 determines an emotion value indicating the emotion of the user 10 based on the information analyzed by the sensor module unit 210 and the state of the user 10 recognized by the user state recognition unit 230. For example, the emotion value indicating the emotion of the user 10 is acquired by inputting the information analyzed by the sensor module unit 210 and the recognized state of the user 10 to a neural network trained in advance.

Here, the emotion value indicating the emotion of the user 10 is a value indicating whether the emotion of the user is positive or negative. For example, the emotion value has a positive value in a case where the emotion of the user is a bright emotion accompanied by pleasure or a sense of calm, such as "joy", "pleasure", "comfort", "relief", "excitement", "reassurance", or "sense of fulfillment", and the emotion value becomes larger as the emotion becomes brighter. The emotion value has a negative value in a case where the emotion of the user is an unpleasant emotion such as "anger", "sorrow", "discomfort", "anxiety", "sadness", "worry", or "sense of emptiness", and the more unpleasant the emotion is, the larger the absolute value of the negative value becomes. In a case where the emotion of the user is not any of the above ("neutral"), the emotion value has a value of 0.

Further, the emotion determination unit 232 determines an emotion value indicating the emotion of the robot 100 based on the information analyzed by the sensor module unit 210 and the state of the user 10 recognized by the user state recognition unit 230.

The emotion value of the robot 100 includes an emotion value for each of a plurality of emotion classifications, and is, for example, a value (0 to 5) indicating an intensity of each of "joy", "anger", "sorrow", and "pleasure".

Specifically, the emotion determination unit 232 determines the emotion value indicating the emotion of the robot 100 according to a rule for updating the emotion value of the robot 100, the rule being set in association with the information analyzed by the sensor module unit 210 and the state of the user 10 recognized by the user state recognition unit 230.

For example, in a case where the user state recognition unit 230 recognizes that the user 10 looks lonely, the emotion determination unit 232 increases the emotion value of "sorrow" of the robot 100. Further, in a case where the user state recognition unit 230 recognizes that the user 10 is smiling, the emotion determination unit 232 increases the emotion value of "joy" of the robot 100.

The emotion determination unit 232 may determine the emotion value indicating the emotion of the robot 100 in further consideration of a state of the robot 100. For example, in a case where the remaining battery level of the robot 100 is low, a case where the surrounding environment of the robot 100 is dark, or the like, the emotion determination unit 232 may increase the emotion value of "sorrow" of the robot 100. Furthermore, in the case of the user 10 who continues to speak to the robot 100 despite the low remaining battery level, the emotion determination unit 232 may increase the emotion value of "anger".

The action recognition unit 234 recognizes the action of the user 10 based on the information analyzed by the sensor module unit 210 and the state of the user 10 recognized by the user state recognition unit 230. For example, a probability of each of a plurality of predetermined action classifications (for example, "laughing", "getting angry", "asking a question", and "being sad") is acquired by inputting the information analyzed by the sensor module unit 210 and the recognized state of the user 10 to the neural network trained in advance, and an action classification having the highest probability is recognized as the action of the user 10.

As described above, in the present embodiment, the robot 100 acquires an utterance content of the user 10 after specifying the user 10, but in acquiring and using the utterance content, the robot 100 acquires necessary consent according to laws and regulations from the user 10. Furthermore, the action control system of the robot 100 according to the present embodiment considers protection of personal information and privacy of the user 10.

The action determination unit 236 determines an action corresponding to the action of the user 10 recognized by the action recognition unit 234, based on the current emotion value of the user 10 determined by the emotion determination unit 232, the historical data 222 of the past emotion value determined by the emotion determination unit 232 before the current emotion value of the user 10 is determined, and the emotion value of the robot 100. In the present embodiment, a case where the action determination unit 236 uses one most recent emotion value included in the historical data 222 as the past emotion value of the user 10 is described, but the disclosed technology is not limited to such an aspect. For example, the action determination unit 236 may use a plurality of most recent emotion values as the past emotion values of the user 10, or may use emotion values from a unit period earlier, such as one day ago, as the past emotion values of the user 10. Further, the action determination unit 236 may determine the action corresponding to the action of the user 10 in further consideration of the history of the past emotion value of the robot 100 in addition to the current emotion value of the robot 100.

The action determination unit 236 according to the present embodiment determines, as the action corresponding to the action of the user 10, the action of the robot 100 based on a combination of the past emotion value and the current emotion value of the user 10, the emotion value of the robot 100, the action of the user 10, and the reaction rule 221. For example, in a case where the past emotion value of the user 10 is a positive value and the current emotion value is a negative value, the action determination unit 236 determines an action for positively changing the emotion value of the user 10 as the action corresponding to the action of the user 10.

In the reaction rule 221, the action of the robot 100 based on a combination of the past emotion value and the current emotion value of the user 10, the emotion value of the robot 100, and the action of the user 10 is set. For example, an action of encouraging the user 10 with a gesture is set as the action of the robot 100 in a case where the past emotion value of the user 10 is a positive value, the current emotion value is a negative value, and the action of the user 10 is being sad.

For example, in the reaction rule 221, actions of the robot 100 are set for all combinations of patterns of the emotion value of the robot 100 (1296 patterns which correspond to the fourth power of six values of "0" to "5" of "joy", "anger", "sorrow", and "pleasure"), patterns of a combination of the past emotion value and the current emotion value of the user 10, and an action pattern of the user 10. That is, for each pattern of the emotion value of the robot 100, the action of the robot 100 based on the action pattern of the user 10 is determined for each of a plurality of combinations of the past emotion value and the current emotion value of the user 10, such as a combination of a negative value and a negative value, a combination of a negative value and a positive value, a combination of a positive value and a negative value, a combination of a positive value and a positive value, a combination of a negative value and a value indicating the neutral emotion, and a combination of a value indicating the neutral emotion and a value indicating the neutral emotion. The action determination unit 236 may transition to an operation mode of determining the action of the robot 100 by using the historical data 222, for example, in a case where the user 10 has made an utterance that intends to continue a conversation of the past topic, such as "I want to talk about the topic we discussed earlier".

In the reaction rule 221, the action of the robot 100 may be set for each pattern (1296 patterns) of the emotion value of the robot 100, with at most one action per pattern. Alternatively, in the reaction rule 221, the action of the robot 100 may be set for each group of the patterns of the emotion values of the robot 100.

The action control unit 250 controls the control target 252 based on the action determined by the action determination unit 236. For example, in a case where the action determination unit 236 determines an action including an utterance, the action control unit 250 causes the speaker included in the control target 252 to output a speech. At this time, the action control unit 250 may determine an utterance speed of the speech based on the emotion value of the robot 100. For example, the action control unit 250 determines a higher utterance speed as the emotion value of the robot 100 is larger. In this manner, the action control unit 250 determines an execution mode of the action determined by the action determination unit 236 based on the emotion value determined by the emotion determination unit 232.

The action control unit 250 may recognize a change in the emotion of the user 10 for execution of the action determined by the action determination unit 236. For example, the change in the emotion may be recognized based on the speech or facial expression of the user 10. In addition, the change in the emotion of the user 10 may be recognized based on detection of an impact applied to the touch sensor included in the sensor unit 200. In a case where an impact is detected by the touch sensor included in the sensor unit 200, it may be recognized that the emotion of the user 10 has become worse. In a case where it is determined that the reaction of the user 10 is smiling or being happy based on a detection result of the touch sensor included in the sensor unit 200, it may be recognized that the emotion of the user 10 has been improved. Information indicating the reaction of the user 10 is output to the communication processing unit 280.

Further, after the action control unit 250 performs the action determined by the action determination unit 236 in the execution mode determined according to the emotion of the robot 100, the emotion determination unit 232 further changes the emotion value of the robot 100 based on the reaction of the user for the execution of the action. Specifically, the emotion determination unit 232 increases the emotion value of "joy" of the robot 100 in a case where the reaction of the user for the action determined by the action determination unit 236 and performed for the user in the execution form determined by the action control unit 250 is not negative. Further, the emotion determination unit 232 increases the emotion value of "sorrow" of the robot 100 in a case where the reaction of the user for the action determined by the action determination unit 236 and performed for the user in the execution form determined by the action control unit 250 is negative.

Furthermore, the action control unit 250 expresses the emotion of the robot 100 based on the determined emotion value of the robot 100. For example, in a case where the emotion value of "joy" of the robot 100 is increased, the action control unit 250 controls the control target 252 to cause the robot 100 to make a joyful gesture. Further, in a case where the emotion value of "sorrow" of the robot 100 is increased, the action control unit 250 controls the control target 252 such that the posture of the robot 100 becomes a drooping posture.

The communication processing unit 280 is responsible for communication with the server 300. As described above, the communication processing unit 280 transmits the user reaction information to the server 300. Further, the communication processing unit 280 receives the updated reaction rule from the server 300. In a case where the updated reaction rule is received from the server 300, the communication processing unit 280 updates the reaction rule 221.

The server 300 performs communication between the server 300 and the robot 100, the robot 101, and the robot 102, receives the user reaction information transmitted from the robot 100, and updates the reaction rule based on a reaction rule including an action for which a positive reaction has been obtained.

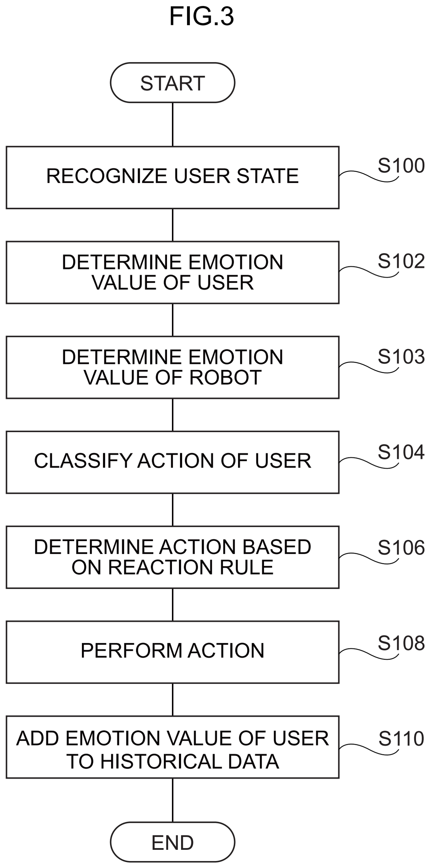

Fig. 3 schematically shows an example of an operation flow related to an operation of determining an action in the robot 100. The operation flow shown in Fig. 3 is repeatedly performed. At this time, it is assumed that the information analyzed by the sensor module unit 210 is input. "S" in the operation flow represents a step to be performed.

First, in step S100, the user state recognition unit 230 recognizes the state of the user 10 based on the information analyzed by the sensor module unit 210.

In step S102, the emotion determination unit 232 determines the emotion value indicating the emotion of the user 10 based on the information analyzed by the sensor module unit 210 and the state of the user 10 recognized by the user state recognition unit 230.

In step S103, the emotion determination unit 232 determines the emotion value indicating the emotion of the robot 100 based on the information analyzed by the sensor module unit 210 and the state of the user 10 recognized by the user state recognition unit 230.

In step S104, the action recognition unit 234 recognizes an action classification of the user 10 based on the information analyzed by the sensor module unit 210 and the state of the user 10 recognized by the user state recognition unit 230.

In step S106, the action determination unit 236 determines the action of the robot 100 based on the combination of the current emotion value of the user 10 determined in step S102 and the past emotion value included in the historical data 222, the emotion value of the robot 100, the action of the user 10 recognized by the action recognition unit 234, and the reaction rule 221.

In step S108, the action control unit 250 controls the control target 252 based on the action determined by the action determination unit 236.

In step S110, the emotion determination unit 232 adds the emotion value of the user 10 determined in step S104 to the historical data 222.

As described above, with the robot 100, it is possible to cause the robot 100 to perform an appropriate action for the action of the user 10. Hitherto, an action of the user has been classified to determine an action including a facial expression or appearance of the robot. On the other hand, the robot 100 determines the current emotion value of the user 10 and performs an action for the user 10 based on the past emotion value and the current emotion value. Therefore, for example, in a case where the user 10 who seemed fine yesterday is depressed today, the robot 100 can make an utterance such as "You seemed fine yesterday. What's wrong today?". Further, the robot 100 can also make an utterance with a gesture. Further, for example, in a case where the user 10 who was depressed yesterday seems fine today, the robot 100 can make an utterance such as "You seemed down yesterday, but you look fine today!". Further, for example, in a case where the user 10 who seemed fine yesterday looks better today than yesterday, the robot 100 can make an utterance such as "You look better today than yesterday. Did anything good happen since yesterday?". Further, for example, the robot 100 can make an utterance such as "You've been in a really stable mood lately. That's great!" for the user 10 whose emotion value is 0 or more and whose emotion value fluctuation continuously remains within a certain range.

Further, for example, in a case where the robot 100 asks the user 10, "Did you finish the homework you mentioned yesterday?", and the user 10 answers "Yeah, I did", the robot 100 can make a positive utterance such as "Good job!" and make a positive gesture such as applause or thumbs-up. Furthermore, for example, in a case where the user 10 makes an utterance "The presentation I talked about the day before yesterday went well", the robot 100 can make a positive utterance such as "Nice effort!" and also make the above affirmative gesture. As described above, the robot 100 performs an action based on a history of the state of the user 10, whereby it can be expected that the user 10 feels a sense of closeness toward the robot 100.

### [Second Embodiment]

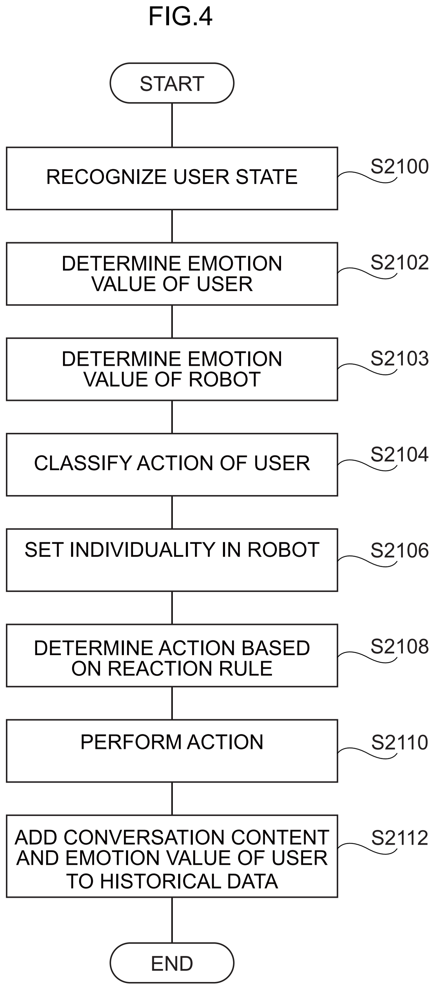

Fig. 4 schematically shows a functional configuration of a robot 100. The robot 100 includes a sensor unit 200, a sensor module unit 210, a storage unit 220, a user state recognition unit 230, an emotion determination unit 232, an action recognition unit 234, an action determination unit 236, an individuality setting unit 238, an action control unit 250, a control target 252, and a communication processing unit 280.

The storage unit 220 includes a reaction rule 221 and historical data 222. The historical data 222 includes at least historical data of a conversation with the user 10 and historical data of an emotion value of the user 10 during the conversation. The historical data of the conversation and the historical data of the emotion value are recorded for each user 10 by being associated with identification information of the user 10, for example. At least a part of the storage unit 220 is implemented by a storage medium such as a memory. A person DB that stores a face image of the user 10, attribute information of the user 10, and the like may be included. Among the components of the robot 100 shown in Fig. 2, functions of the components other than the control target 252, the sensor unit 200, and the storage unit 220 can be implemented by a CPU operating based on a program. For example, the functions of the components can be implemented as an operation of the CPU by basic software (operating system (OS)) and a program operating on the OS.

The individuality setting unit 238 sets an individuality in a case where the robot 100 responds to an action of the user 10. Here, the individuality is a property at the time of response set for each of the robots such as the robot 100, a robot 101, and a robot 102. As for the property set as the individuality, for example, a mood-related property such as "lively", "ordinary", and "calm" may be set, or a thought-related property such as "bold", "ordinary", and "cautious" may be set. In addition, the mood-related property and the thought-related property may be set in combination, like "lively and bold" and "calm and cautious".

The mood-related property mainly affects a volume of a voice, a speed of a speech, a magnitude of a gesture, and the like in a case where the robot 100 performs an action. For example, in a case where the individuality of "lively" is set, a quick conversation is made with a loud voice, and the magnitude of the gesture when the robot 100 performs an action is also increased, as compared with a case where the individuality of "ordinary" is set. Furthermore, in a case where the individuality of "calm" is set, a slow conversation is made with a small voice, and the magnitude of the gesture when the robot 100 performs an action is also decreased, as compared with a case where individuality of "ordinary" is set.

Furthermore, the thought-related property mainly affects an action content, the magnitude of the gesture, and the like in a case where the robot 100 performs an action. For example, in a case where the individuality of "bold" is set, a proposal with a higher risk is made or the action of the user is encouraged, and the magnitude of the gesture when the robot 100 performs an action is also increased, as compared with a case where the individuality of "ordinary" is set. Furthermore, in a case where the individuality of "cautious" is set, a proposal with a lower risk is made, the action of the user is restrained, and the magnitude of the gesture when the robot 100 performs an action is also decreased, as compared with a case where the individuality of "ordinary" is set.

A method of setting the individuality in the individuality setting unit 238 is not particularly limited, and any method can be used. For example, the individuality setting unit 238 may have a plurality of individuality models and select any one of the plurality of individuality models.

Furthermore, the individuality setting unit 238 may set the individuality of the robot 100 in the case of responding to the action of the user 10 based on the historical data 222 including the historical data of the conversation with the user 10 and the historical data of the emotion value of the user 10 during the conversation. For example, in a case where the emotion value of the user is small in the conversation with the user 10, the individuality of "lively" may be set as the individuality of the robot 100 in the case of having the same type of conversation with the user 10.

Furthermore, the historical data 222 may include historical data of the individuality set in the robot 100 during the conversation, in addition to the historical data of the conversation with the user 10 and the historical data of the emotion value of the user 10 during the conversation. In this case, the individuality setting unit 238 may set the individuality of the robot 100 in the case of responding to the action of the user 10 based on the historical data 222 including the historical data of the conversation with the user 10, the historical data of the emotion value of the user 10 during the conversation, and the historical data of the individuality set in the robot 100 during the conversation.

For example, in a case where the emotion value of the user is small in the conversation with the user 10, an individuality different from the individuality in the previous conversation may be set as the individuality in the case of having the same type of conversation with the user 10. Specifically, in a case where the emotion value of the user is small in response to the individuality of "lively" in the previous conversation, the individuality of the robot 100 in the current conversation may be set to "calm".

Furthermore, the individuality setting unit 238 may set the individuality of the robot 100 in the case of responding to the action of the user 10 based on an action classification of the user 10. For example, in a case where the action classification of the user 10 is "being angry", the individuality of "calm" may be set as the individuality of the robot 100 for the user 10. Furthermore, in a case where the action classification of the user 10 is "being sad", the individuality of "lively" may be set as the individuality of the robot 100 for the user 10.

Furthermore, in a case where another robot (for example, the robot 101 or 102) whose individuality can be set participates in the conversation with the user 10, the individuality setting unit 238 may set an individuality different from the individuality set for another robot. For example, in a case where it is recognized that the individuality set in another robot is "bold", the individuality of "cautious" may be set as the individuality of the robot 100.

A method of acquiring information regarding the individuality set in another robot is not particularly limited, and any method can be used. For example, in a case where another robot is connected to a server 300, the individuality setting unit 238 may acquire individuality information set in another robot via the server 300. Furthermore, the individuality setting unit 238 may estimate the individuality set in another robot based on an action form of another robot sensed by the sensor unit 200 and the sensor module unit 210 and recognized in the user state recognition unit 230, the emotion determination unit 232, the action recognition unit 234, and the like.

The action determination unit 236 determines an action corresponding to the action of the user 10 recognized by the action recognition unit 234 based on the individuality set by the individuality setting unit 238, the historical data 222 including the historical data of the conversation with the user 10 and the historical data of the emotion value of the user 10 during the conversation, and the like, and the emotion value of the robot 100. The action determination unit 236 may determine the action corresponding to the action of the user 10 in further consideration of the history of the past emotion value of the robot 100 in addition to the current emotion value of the robot 100.

The action determination unit 236 according to the present embodiment determines, as the action corresponding to the action of the user 10, the action of the robot 100 based on the action of the user 10, the individuality set by the individuality setting unit 238, the reaction rule 221, the historical data 222, and the emotion value of the robot 100.

For example, in a case where the emotion value of the user is small in the conversation with the user 10, the individuality setting unit 238 sets the individuality of "lively" as the individuality of the robot 100 in the case of having the same type of conversation with the user 10. The action determination unit 236 has the conversation with the user 10 based on the individuality of "lively" in the case of having the same type of conversation with the user 10.

Further, in the reaction rule 221, actions of the robot 100 are set for all combinations of patterns of the emotion value of the robot 100 (1296 patterns which correspond to the fourth power of six values of "0" to "5" of "joy", "anger", "sorrow", and "pleasure"), patterns of the individuality, patterns of the historical data of the emotion value of the user 10, and an action pattern of the action of the user 10.

In the reaction rule 221, the action of the robot 100 may be set for each pattern (1296 patterns) of the emotion value of the robot 100, with at most one action per pattern. Alternatively, in the reaction rule 221, the action of the robot 100 may be set for each group of the patterns of the emotion values of the robot 100.

The action control unit 250 controls the control target 252 based on the action determined by the action determination unit 236. For example, in a case where the action determination unit 236 determines an action including an utterance, the action control unit 250 causes the speaker included in the control target 252 to output a speech. At this time, the action control unit 250 may determine an utterance speed of a speech or the like based on the individuality of the robot 100. For example, the action control unit 250 determines a higher utterance speed as the emotion value of the robot 100 is larger. In this manner, the action control unit 250 determines an execution mode of the action determined by the action determination unit 236 based on the emotion value determined by the emotion determination unit 232.

Fig. 4 schematically shows an example of an operation flow related to an operation of determining an action in the robot 100. The operation flow shown in Fig. 4 is repeatedly performed. At this time, it is assumed that the information analyzed by the sensor module unit 210 is input. "S" in the operation flow represents a step to be performed.

First, in step S2100, the user state recognition unit 230 recognizes a state of the user 10 based on the information analyzed by the sensor module unit 210.

In step S2102, the emotion determination unit 232 determines the emotion value indicating the emotion of the user 10 based on the information analyzed by the sensor module unit 210 and the state of the user 10 recognized by the user state recognition unit 230.

In step S2103, the emotion determination unit 232 determines the emotion value indicating the emotion of the robot 100 based on the information analyzed by the sensor module unit 210 and the state of the user 10 recognized by the user state recognition unit 230.

In step S2104, the action recognition unit 234 recognizes the action classification of the user 10 based on the information analyzed by the sensor module unit 210 and the state of the user 10 recognized by the user state recognition unit 230.

In step S2106, the individuality setting unit 238 sets the individuality in a case where the robot 100 responds to the action of the user 10 based on the historical data 222 including the historical data of the conversation with the user 10 and the historical data of the emotion value of the user 10 during the conversation.

In step S2108, the action determination unit 236 determines the action of the robot 100 based on the individuality set by the individuality setting unit 238, the historical data 222, the emotion value of the robot 100, the action of the user 10 recognized by the action recognition unit 234, and the like.

In step S2110, the action control unit 250 controls the control target 252 based on the action determined by the action determination unit 236.

In step S2112, the emotion determination unit 232 adds the emotion value of the user 10 determined in step S2104 and a content of the conversation with the user 10 performed in step S2110 to the historical data 222.

As described above, with the robot 100, it is possible to cause the robot 100 to perform an appropriate action for the action of the user 10. Hitherto, an action of the user has been classified to determine an action including a facial expression or appearance of the robot. On the other hand, the robot 100 of the present embodiment performs an action for the user 10 based on the individuality set by the individuality setting unit 238, the historical data 222 including the historical data of the conversation with the user 10 and the historical data of the emotion value of the user 10 during the conversation, and the like. As a result, it is possible for the robot 100 to perform an individualized response, such as performing an action as if having emotions while sensing an unexpressed atmosphere of a situation or the like.

Therefore, for example, a history of a conversation between a robot installed in a call center and a customer is kept, so that the robot can have a conversation while sensing an unexpressed atmosphere of a situation according to the history of the conversation with the customer.

In addition, for example, different individualities are respectively given to a plurality of robots, such as giving the individuality of "bold" to a robot A, and giving the individuality of "cautious" to a robot B, and the robots participate in a human meeting. As a result, opinions from various viewpoints are proposed from each of the plurality of robots with gestures, so that an active meeting can be made.

In addition, for example, in a case where a history of a conversation between a robot installed in a fast-food restaurant and a customer is kept, and a result of identifying a visiting customer indicates that the customer has a past visit history, the robot provides service with a gesture while saying "Would you like your usual menu?". This makes it possible to give the customer a special feeling of being treated as a regular customer.

Furthermore, for example, the history of the conversation between the robot installed in the fast-food restaurant and the customer, a history of an emotion value during the conversation, a history of an individuality of the robot during the conversation, and the like are kept, and the histories of a plurality of robots are aggregated to acquire information such as which individuality setting of the robot resulted in the highest sales, and which individuality setting of the robot received the best customer reaction (specifically, the emotion value) of the customer to the robot, whereby service quality can be improved.

### [Third Embodiment]

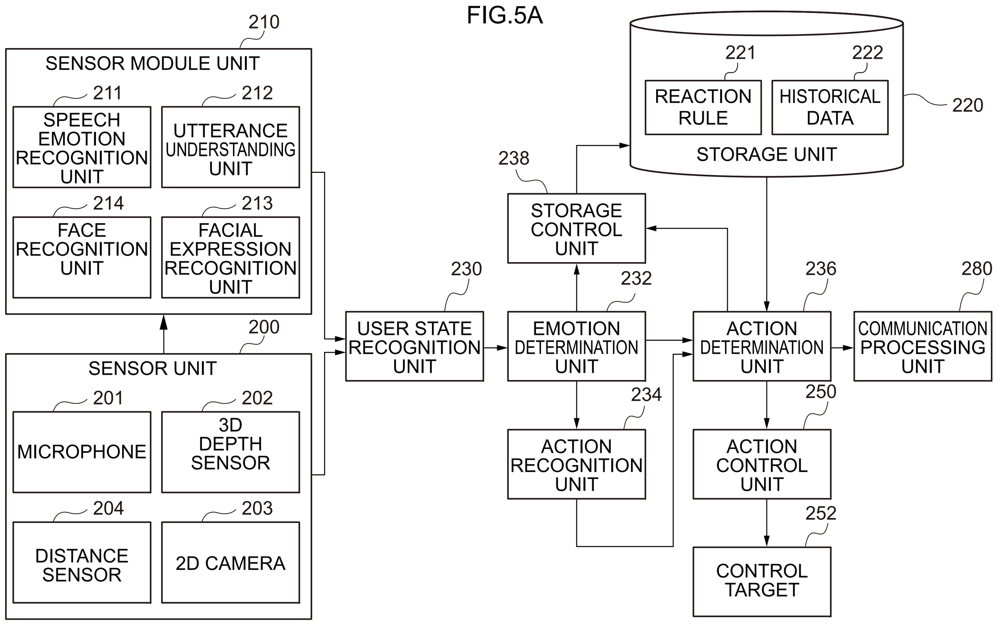

Fig. 5A schematically shows a functional configuration of a robot 100. The robot 100 includes a sensor unit 200, a sensor module unit 210, a storage unit 220, a user state recognition unit 230, an emotion determination unit 232, an action recognition unit 234, an action determination unit 236, a storage control unit 238, an action control unit 250, a control target 252, and a communication processing unit 280.

The storage unit 220 includes a reaction rule 221 and historical data 222. The historical data 222 includes a history of the past emotion value and action of the user 10. The history of the emotion value and the action is recorded for each user 10 by being associated with identification information of the user 10, for example. At least a part of the storage unit 220 is implemented by a storage medium such as a memory. A person DB that stores a face image of the user 10, attribute information of the user 10, and the like may be included. Among the components of the robot 100 shown in Fig. 2, functions of the components other than the control target 252, the sensor unit 200, and the storage unit 220 can be implemented by a CPU operating based on a program. For example, the functions of the components can be implemented as an operation of the CPU by basic software (operating system (OS)) and a program operating on the OS.

The action determination unit 236 determines an action corresponding to the action of the user 10 recognized by the action recognition unit 234, based on the current emotion value of the user 10 determined by the emotion determination unit 232, the historical data 222 of the past emotion value determined by the emotion determination unit 232 before the current emotion value of the user 10 is determined, and the emotion value of the robot 100. In the present embodiment, a case where the action determination unit 236 uses one most recent emotion value included in the historical data 222 as the past emotion value of the user 10 is described, but the disclosed technology is not limited to such an aspect. For example, the action determination unit 236 may use a plurality of most recent emotion values as the past emotion values of the user 10, or may use emotion values from a unit period earlier, such as one day ago, as the past emotion values of the user 10. Further, the action determination unit 236 may determine the action corresponding to the action of the user 10 in further consideration of the history of the past emotion value of the robot 100 in addition to the current emotion value of the robot 100. The action determined by the action determination unit 236 includes the gesture made by the robot 100 or an utterance content of the robot 100.

In the reaction rule 221, the action of the robot 100 based on a combination of the past emotion value and the current emotion value of the user 10, the emotion value of the robot 100, and the action of the user 10 is set. For example, a combination of a gesture and an utterance content when encouraging the user 10 with a gesture is set as the action of the robot 100 in a case where the past emotion value of the user 10 is a positive value, the current emotion value is a negative value, and the action of the user 10 is being sad.

For example, in the reaction rule 221, actions of the robot 100 are set for all combinations of patterns of the emotion value of the robot 100 (1296 patterns which correspond to the fourth power of six values of "0" to "5" of "joy", "anger", "sorrow", and "pleasure"), patterns of a combination of the past emotion value and the current emotion value of the user 10, and an action pattern of the user 10. That is, for each pattern of the emotion value of the robot 100, the action of the robot 100 based on the action pattern of the user 10 is determined for each of a plurality of combinations of the past emotion value and the current emotion value of the user 10, such as a combination of a negative value and a negative value, a combination of a negative value and a positive value, a combination of a positive value and a negative value, a combination of a positive value and a positive value, a combination of a negative value and a value indicating the neutral emotion, and a combination of a value indicating the neutral emotion and a value indicating the neutral emotion. The action determination unit 236 may transition to an operation mode of determining the action of the robot 100 by using the historical data 222, for example, in a case where the user 10 has made an utterance that intends to continue a conversation of the past topic, such as "I want to talk about the topic we discussed earlier".

In the reaction rule 221, at least one of a gesture and a statement content may be set as the action of the robot 100 for each pattern (1296 patterns) of the emotion value of the robot 100, with at most one action per pattern. Alternatively, in the reaction rule 221, at least one of the gesture and the statement content may be set as the action of the robot 100 for each group of the patterns of the emotion values of the robot 100.

An intensity of each gesture included in the action of the robot 100 and set in the reaction rule 221 is set in advance. An intensity of each utterance content included in the action of the robot 100 and set in the reaction rule 221 is set in advance.

The storage control unit 238 determines whether or not to store data including the action of the user 10 in the historical data 222 based on a predetermined action intensity for the action determined by the action determination unit 236 and the emotion value of the robot 100 determined by the emotion determination unit 232.

Specifically, in a case where the total sum of the emotion values of the plurality of emotion classifications of the robot 100 and a total intensity value, which is the sum of the predetermined intensity for the gesture included in the action determined by the action determination unit 236 and the predetermined intensity for the utterance content included in the action determined by the action determination unit 236, are equal to or larger than thresholds, the storage control unit 238 determines to store the data including the action of the user 10 in the historical data 222.

In a case where the storage control unit 238 determines to store the data including the action of the user 10 in the historical data 222, the action determined by the action determination unit 236, the information (for example, any surrounding information such as data such as a sound, an image, and a scent at that time) analyzed by the sensor module unit 210 over a certain period prior to the current time point, and the state (for example, the facial expression or emotion of the user 10) of the user 10 recognized by the user state recognition unit 230 are stored in the historical data 222.

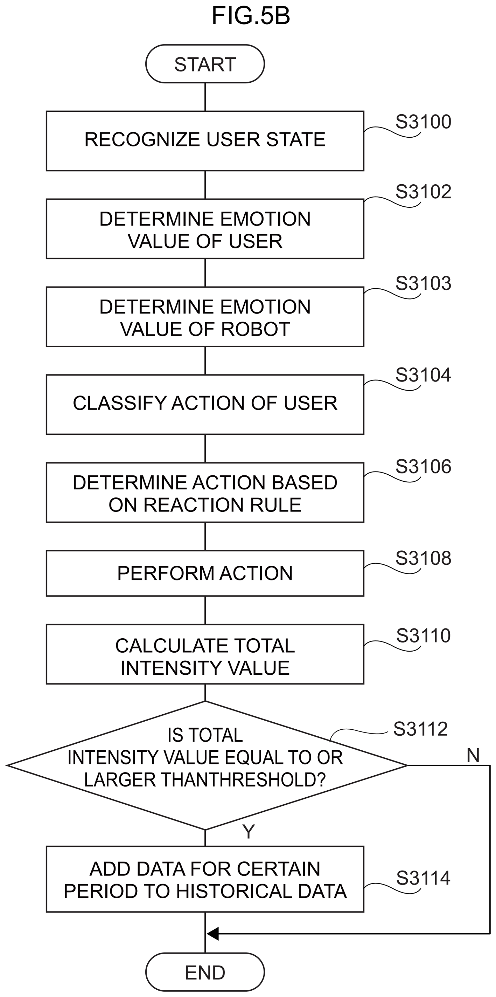

Fig. 5B schematically shows an example of an operation flow related to an operation of determining an action in the robot 100. The operation flow shown in Fig. 5B is repeatedly performed. At this time, it is assumed that the information analyzed by the sensor module unit 210 is input. "S" in the operation flow represents a step to be performed.

First, in step S3100, the user state recognition unit 230 recognizes the state of the user 10 based on the information analyzed by the sensor module unit 210.

In step S3102, the emotion determination unit 232 determines the emotion value indicating the emotion of the user 10 based on the information analyzed by the sensor module unit 210 and the state of the user 10 recognized by the user state recognition unit 230.

In step S3103, the emotion determination unit 232 determines the emotion value indicating the emotion of the robot 100 based on the information analyzed by the sensor module unit 210 and the state of the user 10 recognized by the user state recognition unit 230. The emotion determination unit 232 adds the determined emotion value of the user 10 to the historical data 222.

In step S3104, the action recognition unit 234 recognizes an action classification of the user 10 based on the information analyzed by the sensor module unit 210 and the state of the user 10 recognized by the user state recognition unit 230.

In step S3106, the action determination unit 236 determines the action of the robot 100 based on the combination of the current emotion value of the user 10 determined in step S3102 and the past emotion value included in the historical data 222, the emotion value of the robot 100, the action of the user 10 recognized by the action recognition unit 234, and the reaction rule 221.

In step S3108, the action control unit 250 controls the control target 252 based on the action determined by the action determination unit 236.

In step S3110, the storage control unit 238 calculates the total intensity value based on the predetermined action intensity for the action determined by the action determination unit 236 and the emotion value of the robot 100 determined by the emotion determination unit 232.

In step S3112, the storage control unit 238 determines whether or not the total intensity value is equal to or larger than the threshold. In a case where the total intensity value is smaller than the threshold, the data including the action of the user 10 is not stored in the historical data 222, and the processing ends. On the other hand, in a case where the total intensity value is equal to or larger than the threshold, the processing proceeds to step S3114.

In step S3114, the action determined by the action determination unit 236, the information analyzed by the sensor module unit 210 over a certain period prior to the current time point, and the state of the user 10 recognized by the user state recognition unit 230 are stored in the historical data 222.

As described above, with the robot 100, the emotion value indicating the emotion of the robot 100 is determined based on the state of the user, and whether or not to store the data including the action of the user 10 in the historical data 222 is determined based on the emotion value of the robot 100. As a result, a volume of the historical data 222 that stores the data including the action of the user 10 can be reduced. Then, for example, in a case where the robot 100 determines that the state of the user after ten years matches the state of the user from ten years earlier, the robot 100 can read the historical data 222 from ten years ago to present, to the user 10, the state of the user 10 from ten years earlier (for example, the facial expression or emotion of the user 10), and further, any surrounding information such as data of a sound, an image, and a scent at that time.

In the above embodiment, a case where the robot 100 recognizes the user 10 by using the face image of the user 10 has been described, but the disclosed technology is not limited to such an aspect. For example, the robot 100 may recognize the user 10 by using a voice uttered by the user 10, a mail address of the user 10, an ID of a social network service (SNS) of the user 10, an ID card in which a wireless IC tag is embedded and which is possessed by the user 10, or the like.

The robot 100 is an example of electronic equipment including the action control system. An application target of the action control system is not limited to the robot 100, and the action control system can be applied to various types of electronic equipment. Further, functions of a server 300 may be implemented by one or more computers. At least some functions of the server 300 may be implemented by a virtual machine. Further, at least some functions of the server 300 may be implemented on a cloud.

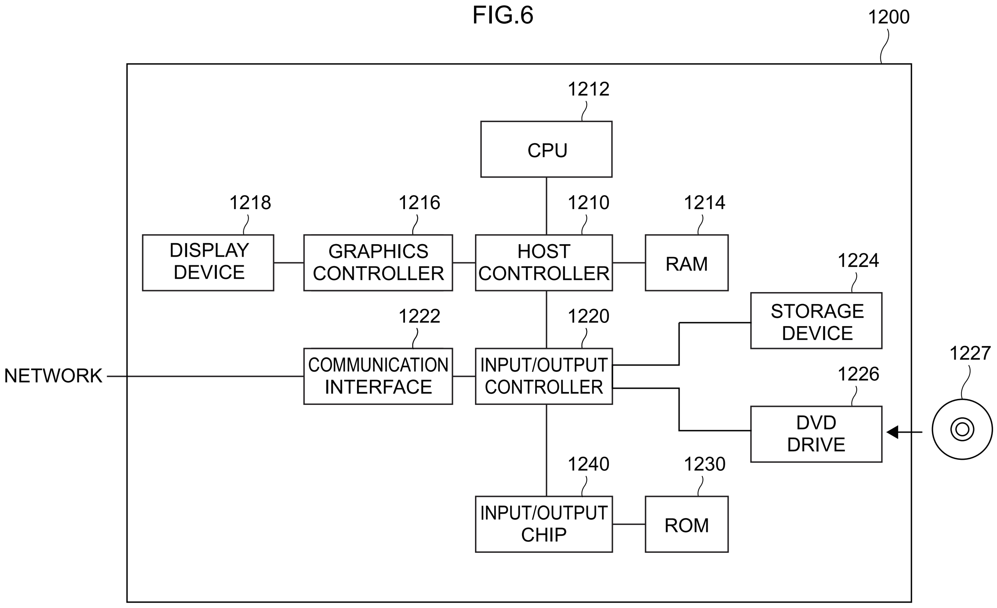

Fig. 6 schematically shows an example of a hardware configuration of a computer 1200 that functions as the robot 100 and the server 300. A program installed in the computer 1200 can cause the computer 1200 to function as one or more "units" of the device according to the present embodiment, or cause the computer 1200 to perform an operation associated with the device according to the embodiment or one or more "units" thereof, and/or can cause the computer 1200 to execute a process according to the embodiment or a stage of the process. Such a program may be executed by a CPU 1212 to cause the computer 1200 to perform a certain operation associated with some or all of the blocks in the flowcharts and block diagrams described herein.

The computer 1200 according to the embodiment includes the CPU 1212, a random access memory (RAM) 1214, and a graphics controller 1216, which are mutually connected by a host controller 1210. The computer 1200 also includes input/output units such as a communication interface 1222, a storage device 1224, a digital versatile disk (DVD) drive 1226, and an integrated circuit (IC) card drive, which are connected to the host controller 1210 via an input/output controller 1220. The DVD drive 1226 may be a DVD-ROM drive, a DVD-RAM drive, or the like. The storage device 1224 may be a hard disk drive, a solid state drive, or the like. The computer 1200 also includes a read only memory (ROM) 1230 and a legacy input/output unit such as a keyboard, which are connected to the input/output controller 1220 via an input/output chip 1240.

The CPU 1212 operates according to the program stored in the ROM 1230 and the RAM 1214, thereby controlling each unit. The graphics controller 1216 acquires image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores the program and data to be used by the CPU 1212 in the computer 1200. The DVD drive 1226 reads the program or data from a DVD-ROM 1227 or the like and provides the program or data to the storage device 1224. The IC card drive reads the program and data from an IC card and/or writes the program and data to the IC card.

The ROM 1230 stores therein a boot program to be executed by the computer 1200 at the time of activation and/or a program that depends on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as the DVD-ROM 1227 or the IC card. The program is read from the computer-readable storage medium, installed in the storage device 1224, the RAM 1214, or the ROM 1230, which is also an example of the computer-readable storage medium, and executed by the CPU 1212. Information processing described in these programs is read by the computer 1200 and provides cooperation between the programs and various types of hardware resources described above. The device or method may be configured by implementing operation or processing of information according to the use of the computer 1200.

For example, in a case where communication is performed between the computer 1200 and an external device, the CPU 1212 may execute a communication program loaded into the RAM 1214 and instruct the communication interface 1222 to execute communication processing based on processing described in the communication program. Under the control of the CPU 1212, the communication interface 1222 reads transmission data stored in a transmission buffer region provided in a recording medium such as the RAM 1214, the storage device 1224, the DVD-ROM 1227, or the IC card, transmits the read transmission data to the network, or writes reception data received from the network to a reception buffer region or the like provided on the recording medium.

In addition, the CPU 1212 may read a necessary part of or the entire file or database stored in an external recording medium such as the storage device 1224, the DVD drive 1226 (DVD-ROM 1227), the IC card, or the like into the RAM 1214, and may perform various types of processing on the data on the RAM 1214. Next, the CPU 1212 may write back the processed data to the external recording medium.

Various types of information such as various types of programs, data, tables, and databases may be stored in a recording medium and subjected to the information processing. The CPU 1212 may perform various types of processing on the data read from the RAM 1214, the various types of processing including various types of operations, the information processing, condition determination, conditional branching, unconditional branching, and information search/replacement, which are described throughout the disclosure and designated by a command sequence of a program, and write back the results to the RAM 1214. In addition, the CPU 1212 may search for information in a file, a database, or the like in the recording medium. For example, in a case where a plurality of entries each having an attribute value of a first attribute associated with an attribute value of a second attribute are stored in the recording medium, the CPU 1212 may search for an entry in which the attribute value of the first attribute satisfies a designated condition among the plurality of entries, read the attribute value of the second attribute stored in the entry, and thereby acquire the attribute value of the second attribute associated with the first attribute satisfying a predetermined condition.

The program or software module described above may be stored in a computer-readable storage medium on the computer 1200 or in the vicinity of the computer 1200. Further, a recording medium such as a hard disk or a RAM provided in a server system connected to a dedicated communication network or the Internet can be used as the computer-readable storage medium, thereby providing a program to the computer 1200 via the network.

The blocks in the flowcharts and block diagrams in the embodiment may represent stages of a process in which the operation is performed or "units" of the device that are responsible for performing the operation. Certain stages and "units" may be implemented by a dedicated circuit, a programmable circuit provided together with a computer-readable instruction stored on a computer-readable storage medium, and/or a processor provided together with the computer-readable instruction stored on the computer-readable storage medium. The dedicated circuit may include a digital and/or analog hardware circuit, and may include an integrated circuit (IC) and/or a discrete circuit. The programmable circuit may include a reconfigurable hardware circuit including, for example, AND, OR, XOR, NAND, NOR, and other logical operations, a flip-flop, a register, and a memory element, such as a field programmable gate array (FPGA) and a programmable logic array (PLA).

The computer-readable storage medium may include any tangible device capable of storing an instruction to be executed by a suitable device, so that the computer-readable storage medium having the instruction stored therein includes an article including an instruction that may be executed to create means for performing the operation specified in the flowcharts or block diagrams. Examples of the computer-readable storage medium may include an electronic storage medium, a magnetic storage medium, an optical storage medium, an electromagnetic storage medium, and a semiconductor storage medium. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disc read only memory (CD-ROM), a digital versatile disk (DVD), a Blu-Ray disk, a memory stick, and an integrated circuit card.

The computer-readable instruction may include a source code or an object code described in any combination of one or more programming languages, including an assembler instruction, an instruction-set-architecture (ISA) instruction, a machine instruction, a machine-dependent instruction, a microcode, a firmware instruction, state setting data, or an object-oriented programming language such as Smalltalk, JAVA (registered trademark), or C++, and a procedural programming language according to the related art, such as the "C" programming language or similar programming languages.

The computer-readable instruction may be provided for a processor of a general purpose computer, a special purpose computer, or another programmable data processing device, or a programmable circuit, either locally or via a local area network (LAN) or a wide area network (WAN) such as the Internet, to cause the processor of the general purpose computer, the special purpose computer, or the another programmable data processing device or the programmable circuit to execute the computer-readable instruction to generate means for performing the operation designated in the flowcharts or block diagrams. Examples of the processor include a computer processor, a processing unit, a microprocessor, a digital signal processor, a controller, and a microcontroller.

Although the invention has been described with reference to the embodiments, the technical scope of the invention is not limited to the scope described in the embodiments. It is apparent to those skilled in the art that various modifications or improvements can be made to the above embodiments. It is apparent from the description of the claims that such changed embodiments or improved embodiments can also be included in the technical scope of the invention.

It should be noted that an order of execution of processing such as operations, procedures, steps, and stages in the devices, systems, programs, and methods shown in the claims, the specification, and the drawings can be implemented in any order unless "before", "prior to", or the like is explicitly stated, and unless the output of the previous processing is used in the later processing. Even in a case where the operation flow in the claims, the specification, and the drawings is described using the terms "first", "next", and the like for convenience, it does not mean that it is essential to execute the operation flow in this order.

The disclosures of Japanese Patent Application No. 2023-061766, Japanese Patent Application No. 2023-061767, Japanese Patent Application No. 2023-063085, Japanese Patent Application No. 2023-063086, and Japanese Patent Application No. 2023-063087 are incorporated herein by reference in their entireties.

All documents, patent applications, and technical standards mentioned herein are incorporated herein by reference to the same extent as if each individual document, patent application, and technical standard were specifically and individually stated.

## Claims

1. An action control system comprising:
a user state recognition unit that recognizes a user state including an action of a user;
an emotion determination unit that determines an emotion value indicating an emotion of the user based on the user state; and
an action determination unit that determines an action corresponding to the action of the user based on a current emotion value determined by the emotion determination unit and historical data of a past emotion value determined by the emotion determination unit before the current emotion value is determined.

2. The action control system according to claim 1, wherein the action determination unit determines, as the action corresponding to the action of the user, an action corresponding to a combination of the past emotion value and the current emotion value and an action classification of the user.

3. The action control system according to claim 2, wherein in a case where the past emotion value is a positive value and the current emotion value is a negative value, the action determination unit determines, as the action corresponding to the action of the user, an action for changing the emotion value of the user to be a positive value.

4. The action control system according to any one of claims 1 to 3, further comprising an action recognition unit that recognizes an action classification of the user based on the user state,
wherein the action determination unit determines, as the action corresponding to the action of the user, an action determined based on a reaction rule corresponding to a combination of the past emotion value and the current emotion value and the action classification of the user.

5. The action control system according to any one of claims 1 to 3, wherein the action determined by the action determination unit includes a gesture to be made by a robot.

6. The action control system according to any one of claims 1 to 3, wherein
the emotion determination unit further determines an emotion value indicating an emotion of a robot, and
the action determination unit determines the action corresponding to the action of the user based on the current emotion value of the user determined by the emotion determination unit, the historical data of the past emotion value of the user determined by the emotion determination unit before the current emotion value is determined, and the emotion value of the robot.

7. The action control system according to claim 6, wherein the emotion determination unit determines the emotion value indicating the emotion of the robot based on the user state or a state of the robot.

8. A program for causing a computer to function as the action control system according to any one of claims 1 to 3.

9. A robot comprising:
the action control system according to any one of claims 1 to 3; and
a control target to be controlled by the action control system.

10. An action control system comprising:
a user state recognition unit that recognizes a user state including an action of a user;
an emotion determination unit that determines an emotion value indicating an emotion of the user based on the user state recognized by the user state recognition unit;
an individuality setting unit that sets an individuality of a robot in a case of responding to the action of the user; and
an action determination unit that determines an action of the robot corresponding to the action of the user based on the individuality set by the individuality setting unit, historical data of a conversation with the user, and historical data of the emotion value of the user during the conversation.

11. The action control system according to claim 10, wherein the individuality setting unit sets the individuality of the robot in a case of responding to the action of the user based on the historical data of the conversation with the user and the historical data of the emotion value.

12. The action control system according to claim 11, wherein the individuality setting unit sets the individuality of the robot in a case of responding to the action of the user based further on historical data of the individuality of the robot set during the conversation with the user.

13. The action control system according to claim 10, further comprising an action recognition unit that recognizes an action classification of the user based on the user state,
wherein the individuality setting unit sets the individuality of the robot in a case of responding to the action of the user based on the action classification of the user.

14. The action control system according to claim 10, wherein the action determined by the action determination unit includes a gesture to be made by the robot.

15. The action control system according to claim 10, wherein the emotion determination unit further determines an emotion value indicating an emotion of the robot, and
the action determination unit determines the action corresponding to the action of the user based on the individuality set by the individuality setting unit, the historical data of the conversation with the user, the historical data of the emotion value of the user during the conversation, and the emotion value of the robot.

16. The action control system according to claim 15, wherein the emotion determination unit determines the emotion value indicating the emotion of the robot based on the user state or a state of the robot.

17. A program for causing a computer to function as the action control system according to any one of claims 10 to 16.

18. A robot comprising:
the action control system according to any one of claims 10 to 16; and
a control target to be controlled by the action control system.

19. The robot according to claim 18, wherein in a case where a plurality of robots whose individuality is settable participate in a conversation in addition to the user, the individuality setting unit sets an individuality that is different from an individuality set in another robot.

20. An action control system comprising:
a user state recognition unit that recognizes a user state including an action of a user;
an emotion determination unit that determines an emotion value indicating an emotion of a robot;
a storage control unit that determines whether or not to store data including the action of the user in historical data based on the emotion value determined by the emotion determination unit; and
an action determination unit that determines an action corresponding to the action of the user based on the user state.

21. The action control system according to claim 20, wherein the storage control unit determines whether or not to store the data including the action of the user in the historical data based on a predetermined action intensity for the action determined by the action determination unit and the emotion value determined by the emotion determination unit.

22. The action control system according to claim 20, wherein
the emotion value of the robot includes emotion values for a plurality of emotion classifications, and
the storage control unit determines whether or not to store the data including the action of the user in the historical data based on a total sum of the emotion values for the plurality of emotion classifications.

23. The action control system according to claim 21, wherein
the action determined by the action determination unit includes a gesture to be made by the robot or an utterance content of the robot, and
the storage control unit determines whether or not to store the data including the action of the user in the historical data based on a predetermined action intensity for the gesture or the utterance content included in the action determined by the action determination unit and the emotion value determined by the emotion determination unit.

24. The action control system according to any one of claims 20 to 23, wherein the emotion determination unit determines the emotion value indicating the emotion of the robot based on the user state or a state of the robot.

25. A program for causing a computer to function as the action control system according to any one of claims 20 to 23.

26. A robot comprising:
the action control system according to any one of claims 20 to 23; and
a control target to be controlled by the action control system.
